# EUROPEAN PATENT APPLICATION

(11) **EP 4 815 039 A1**
(43) Date of publication of application: **30.09.2026**
(21) Application number: 25382290.2
(22) Date of filing: 26.03.2025
(51) Int. Cl.: H01M 4/04, H01M 4/139, H01M 4/62, H01M 4/525, H01M 4/587, H01M 4/66, H01M 10/0525, H01M 4/02

(54) **SLURRY FOR MANUFACTURING FLEXIBLE ELECTRODES, FLEXIBLE ELECTRODES OBTAINED FROM SAID SLURRY, PROCESS AND METHOD FOR MANUFACTURING THEREOF**

(71) Applicant: Cramik Additive Solutions SL, 46980 Paterna (Valencia) (ES)
(72) Inventor: BLANC ACEBAL, Inés, 46980 Paterna, Valencia (ES); REGLERO RUIZ, Jose Antonio, 46980 Paterna, Valencia (ES)
(74) Representative: Balder IP Law, S.L.

(57) **Abstract**

The present invention refers to a slurry for manufacturing flexible electrodes, wherein said slurry is a suspension comprising at least 60 wt.% solids in suspension (SIS) comprising at least one electrochemical active material, a gelling agent, a binder, a plasticizing agent, a surfactant and a lubricant. It is also provided a process for manufacturing said slurry, a flexible electrode obtained from said slurry, a method for manufacturing said electrode by Liquid Deposition Modelling (LDM) or robocasting, and a lithium-ion battery (LIB) comprising at least one of said flexible electrode.

## Description

### FIELD OF THE INVENTION

The invention refers to a slurry for manufacturing flexible electrodes. The slurry comprises at least 60 wt.% solids in suspension (SIS), wherein said SIS comprises at least one electrochemical active material and, additionally, a specific combination of gelling agent, binder, plasticizing agent, surfactant and lubricant.

Furthermore, the invention refers to a flexible electrode obtained from said slurry by Liquid Deposition Modelling (LDM) or robocasting, as well as to a process for manufacturing the slurry of the invention, a method for manufacturing the flexible electrodes by Liquid Deposition Modelling (LDM) or robocasting, and a lithium-ion battery (LiB) comprising at least one of the flexible electrodes of the invention.

### BACKGROUND OF THE INVENTION

One of the energy storage devices most widespread in the worldwide marked are rechargeable lithium-ion batteries (LiBs). They represent a great advantage over other alternative devices due to the combination of their capacity to provide high power and energy density with a long life cycle, negligible memory effect and a reasonable cost. As a consequence, LiBs are generating a great interest in a number of different areas such as energy storage systems, consumer electronics, power tools, medical instruments or electronic vehicles (EVs).

With the aim of complying with the increasingly demanding requirements of the industry, in particular in terms of energy density, cycle life, safety, reduced size, weight and, last but not least, cost, different approaches have been considered being one of those the improvement of the electrochemical properties of the materials involved: electrodes, electrolytes and/or capacitators.

Additive manufacturing (AM) technologies have shown their potential application in the production of energy devices such as lithium-ion batteries (LiBs) and, more specifically, electrodes of said LiBs. For instance, J.F. Valera-Jiménez et al., "Development of full ceramic electrodes for lithium-ion batteries via desktop-fused filament fabrication and further sintering", Applied Materials Today 25 (2021), 101243 relates to the fabrication of full ceramic LiB electrodes via fused filament fabrication (FFF) and subsequent debinding/sintering treatment. According to this document, filament of LTO, LCO, LTO/C and LCO/C produced according to the process of WO2017191340 A1 were used for FFF 3D printing. After that, debinding was carried out up to 550°C using specific conditions for LTO or LCO using a 1 °C/min ramp rate in the case of LTO, and the same ramp rate but with isothermal stages at 200 °C (2 h), 300 °C (2 h), 400 °C (2 h) and 550 °C (1 h) in the case of LCO to ensure dimensional stability. Then, both the LTO and LCO components were sintered at 900 °C for 6 h. However, the electrodes disclosed therein are extremely fragile and rigid and, consequently, their handling and implementation in functional devices is severely compromised. In particular, those electrodes cannot be used in roll-up displays or wearable devices such as watches and eyeglasses. Another important drawback of the electrodes manufactured according to this process is that the thermal treatment may generate some dimensional distortion (deformation) which will make it difficult to assemble the electrodes into the case. Since these electrodes are not plane due to this distortion, the contact between the electrode and the foil is not complete and, consequently, their electrochemical performance may be negatively affected.

### DESCRIPTION OF THE INVENTION

The inventors surprisingly found that the particular combination of organic compounds and at least 60 wt.% solids in suspension (SIS) as defined herein provides a slurry which can be used in the manufacturing of flexible electrodes having the required electrochemical performance.

Thus, a first aspect of the invention refers to a slurry for manufacturing flexible electrodes, wherein said slurry is a suspension comprising the following components:
a) at least 60 wt.% solids in suspension (SIS) comprising at least one electrochemical active material,
b) a gelling agent selected from glycol, ethanolamine and mixtures thereof,
c) a binder selected from vinyl resins and mixtures thereof,
d) a plasticizing agent selected from phthalates and mixtures thereof,
e) a surfactant selected from ≥C₁₆ alkyl carboxylic acids, preferably C₁₆-C₃₀ fatty acids, and mixtures thereof; and
f) a lubricant agent selected from vegetable oils and mixtures thereof;
wherein, in the suspension,
the ratio of the gelling agent with respect to the SIS is from 1:2 to 1:30 by weight,
the ratio of the binder with respect to the SIS is from 1:3 to 1:40 by weight,
the ratio of the plasticizing agent with respect to the SIS is from 1:5 to 1:20 by weight,
the ratio of the surfactant with respect to the SIS is from 1:5 to 1:100 by weight, and
the ratio of the lubricant with respect to the SIS is from 1:36 to 1:200 by weight; and wherein the slurry has a viscosity of 5000 to 35000 Pa·s, measured at a shear rate of 0.1 s-1 and 25 °C.

The specified viscosity is required in order to manufacture the electrodes of the invention by Liquid Deposition Modelling (LDM) or robocasting, in particular, according to the method as described in this document. Thus, slurries having a viscosity greater than 35000 Pa·s cannot be properly printed by LDM or robocasting, whereas slurries having a viscosity less than 5000 Pa·s may give rise to an uncontrollable material outflow which makes it difficult, or even impossible, to define the printing profile of a piece.

The slurry of the invention comprises at least 60 wt.% solids in suspension (SIS) comprising at least one electrochemical active material. In preferred embodiments, the slurry comprises of 60 wt.% to 85 wt.%, preferably of 75 wt.% to 85 wt.%, and more preferably of 80 wt.% to 85 wt.%, of said solids in suspension.

A minimum amount of 60 wt.% SIS is needed, since a lower amount can compromise the stability of the slurry and/or negatively affect the electrochemical properties of the electrode obtained from said slurry. On the other hand, the amount of SIS in the slurry is preferably equal to or less than 85 wt.%, since a higher amount may compromise the stability of the slurry due to sedimentation of the SIS and/or because the amount of organic matter in the slurry may not be enough to achieve a correct homogenization.

The solid in suspension (SIS) comprises at least one electrochemical active material. The amount of said electrochemical active material may be of 80 wt.% to 100 wt.%, expressed as weight percentage of the active material with respect to the weight of SIS.

In the frame of this invention, it should be understood that the term "electrochemical active material" refers to an inorganic material which has suitable electrochemical performance, electric conductivity and is able to intercalate lithium ions without changes in their crystalline structure and, preferably, without degradation of the material after a number of charge and discharge cycles.

In those embodiments of the invention wherein the slurry is for the manufacture of an anode, the electrochemical active material can be selected from the group consisting of graphite and lithium titanium oxide (LTO), preferably the active material is graphite.

In those embodiments wherein the slurry is for the manufacture of a cathode, the electrochemical active material can be selected from the group consisting of lithium manganese oxide (LMNO), lithium cobalt oxide (LCO), lithium manganese oxide (LMO), lithium iron phosphate (LiFePO₄) and lithium nickel manganese cobalt oxide (Li-NMC). Preferably the active material is lithium manganese oxide (LMNO).

In some particular embodiments of the invention, in addition to the electrochemical active material as described herein, the SIS may further comprise at least one electric conductive additive, at least one ionic conductive additive or a combination thereof.

The electric conductive additive can be present in an amount equal to or less than 10 wt.%, expressed as weight percentage with respect to the SIS. This additive helps to increase the electric conductivity of the active material and may be a conductive black carbon such as C65, C45, graphite or a combination thereof. In particular embodiments of the invention the electric conductive additive is C65. This conductive black carbon, commonly used in the art, differs from C45 in particle size and structure. Typically, carbon black C65 has a particle size of about 30-50 nm, a greater superficial area and more branched structure than C45, which is about 40-80 nm particle size.

The ionic conductive additive can be present in an amount equal to or less than 10 wt.%, expressed as weight percentage with respect to the SIS. This additive helps to increase the ionic conductivity of the active material. The ionic conductive additive can be selected from lithium lanthanum zirconium oxide (LLZO), lithium lanthanum titanate perovskite-type ceramic (LLTO), lithium aluminium titanate phosphate nasicon-type (LATP) and lithium germanium phosphate (LGP); preferably the ionic conductive additive is lithium lanthanum zirconium oxide (LLZO).

Thus, the SIS comprised in the slurry for manufacturing flexible electrodes of the invention may comprise:
80 wt.% to 100 wt.% of at least one electrochemical active material,
0 to 10 wt.% of at least one electric conductive additive, and
0 to 10 wt.% of at least one ionic conductive additive,
wherein these amounts are expressed as weight percentage with respect to the total weight of solids in suspension (SIS), and the electrochemical active material, electric conductive additive and ionic conductive additive are as described in this document.

In addition to the SIS, an essential component of the slurry of the invention is the combination of organic compounds: gelling agent, binder, plasticizing agent, surfactant and lubricant that allow the manufacture of the flexible electrodes of the invention by Liquid Deposition Modelling (LDM) or robocasting.

Thus, the slurry for manufacturing flexible electrodes of the invention is a suspension comprising a gelling agent selected from glycol, ethanolamine and mixtures thereof, wherein the ratio of said gelling agent with respect to the SIS is from 1:2 to 1:30 by weight, preferably of 1:4 to 1:20 by weight.

In the context of this document, it should be understood that "glycol" means an organic compound comprising two hydroxyl groups attached to different carbon atoms. More specifically, the glycol may comprise two hydroxyl groups linked by a C₂-C₄ alkyl chain or it may be a polyalkylene glycol of formula HO-[C₂-C₄ alkylene-O]n- C₂-C₄ alkylene-OH, wherein n is an integer number higher equal to or greater than 1. Thus, the alkyl moiety present in the glycol compound is a, preferably lineal, C₂-C₄ alkyl chain since longer alkyl chains typically become predominantly non-polar, thereby resulting in an undesired increase of viscosity and reduction of its capability of forming hydrogen bonds with other compounds. In particular embodiments, the glycol may be selected from ethylene glycol, propylene glycol, butylene glycol, polyethylene glycol, polypropylene glycol, polybutylene glycol and a combination thereof. In more particular embodiments, the glycol may be selected from ethylene glycol, polyethylene glycol having a molecular weight equal to or greater than 400 g/mol and a combination thereof. And, in even more particular embodiments, the glycol is selected from ethylene glycol and polyethylene glycol having a molecular weight of 400 g/mol (PEG400).

The gelling agent may be ethanolamine or a mixture of ethanolamine and glycol. In those embodiments, the ethanolamine can be monoethanolamine, diethanolamine or triethanolamine. In preferred embodiments, however, the gelling agent is glycol as defined above, more preferably ethylene glycol or PEG400.

The binder comprised in the slurry for manufacturing flexible electrodes of the invention is a vinyl resin or a mixture of vinyl resins, wherein the ratio of said binder with respect to the SIS is from 1:3 to 1:40 by weight, preferably of 1:5 to 1:30 by weight.

Preferably, the binder is a vinyl resin selected from polyvinyl acetate (PVA), polyvinyl butyral (PVB) and a mixture thereof. More preferably, the binder is polyvinyl butyral (PVB). The binder according to the invention, in particular PVB, preferably has a glass transition temperature (Tg) of 50°C to 80°C.

A further essential component of the slurry for manufacturing flexible electrodes of the invention is a plasticizing agent selected from phthalates and mixtures thereof, wherein the ratio of said plasticizing agent with respect to the SIS is from 1:5 to 1:20 by weight, preferably of 1:15 to 1:19 by weight.

The phthalate may be one or more C₄-C₃₀ dialkyl ester of phthalic acid such as, for example, dibutyl phthalate (DBP), dioctyl phthalate (DOP), diundecyl phthalate (DUP) or ditridecyl phthalate (DTDP).

In preferred embodiments of the invention, the plasticizing agent is a phthalate as described herein and, more preferably, dibutyl phthalate (DBP).

The combination of binder, gelling agent and plasticizing agent as described herein creates a suitable carrier for the correct suspension of the SIS, thus allowing the preparation of a slurry homogeneous and stable over time.

An increase in the proportion of these organic compounds over the specified ranges would lead to an excessively fluid slurry with a viscosity too low. As a result of this reduced viscosity, the slurry would be difficult to handle and, additionally, the stability of said slurry and/or the printing process could be compromised, which would negatively affect the quality of the green body (i.e., printed electrode). Besides, a higher proportion of these organics would result in a printed electrode with a lower wt.% of SIS, which would reduce the electrochemical response of said electrode.

On the other hand, a reduction in the proportion of these organic compounds over the specified ranges implies a reduction of the carrier wherein the SIS are suspended. This could result in an heterogenous slurry due to lack of integrity of the SIS in the organic carrier and the settlement of solids. As a consequence, the stability of the slurry and, therefore, the reproducibility of the printed electrodes would be compromised.

More specifically, an amount of binder lower than 1:40 by weight with respect to the SIS present in the slurry may give rise to an improper distribution of the SIS and settlement of the solids. As a result, a heterogeneous slurry which cannot be used in a reproducible way could be obtained. Nonetheless, if the amount of binder was higher than 1:3, the viscosity of the slurry could be too high, leading to unstable and difficult to handle slurries.

An amount of plasticizing agent lower than 1:20 by weight with respect to the SIS present in the slurry reduces the interactions through hydrogen bonds which generates the three-dimensional web sustaining the electrochemical active components of the slurry (i.e., the SIS) and, as a result, those components cannot be properly integrated giving and give rise to a heterogeneous slurry. Besides, an amount of plasticizing agent lower than the established weight ratio results in a less plastic slurry, which may jeopardize the consistency of the final electrode. On the other hand, if the amount of plasticizing agent was higher than 1:5, the viscosity of the slurry could be too low, thus compromising the stability of the final electrode and the extrusion flow control in the manufacturing process to obtain said electrode.

Regarding the gelling agent, an amount lower than 1:30 by weight with respect to the SIS present in the slurry reduces the interactions through hydrogen bonds which generates the three-dimensional web sustaining the electrochemical active components of the slurry and, as a result, said components cannot be properly integrated and give rise to a heterogeneous slurry. In addition to that, an amount of gelling agent lower than the established weight ratio results in a less fluid slurry and may compromise the distribution of the solid particles, which may negatively affect the proper consistency of the final electrode. However, if the amount of gelling agent was higher than 1:2, the viscosity of the slurry could be too low, thus compromising the stability of the final electrode and the extrusion flow control in the manufacturing process to obtain said electrode.

The surfactant comprised in the slurry for manufacturing flexible electrodes of the invention is a ≥C₁₆ alkyl carboxylic acid or a mixture of ≥C₁₆ alkyl carboxylic acids; and the ratio of said surfactant with respect to the SIS is from 1:5 to 1:100 by weight, preferably of 1:10 to 1:100 by weight.

Preferably, the surfactant is a carboxylic acid with a C₁₆-C₃₀ aliphatic chain, more preferably a C₁₆-C₂₃ aliphatic chain. Said surfactant may be a saturated, partially saturated or unsaturated carboxylic acid (also known in the art as fatty acid). More specifically, the surfactant may be selected from palmitic acid (C16:0), stearic acid (C18:0), arachidic acid (C20:0), behenic acid (C22:0), lignoceric acid (C24:0), cerotic acid (C26:0) and a mixture thereof.

Without being bound by the theory, it is believed that the surfactant as defined herein is capable of surrounding the solid particles in suspension and providing a uniform distribution of said solid particles in the media, which contributes to the homogeneity of the slurry. The obtention of a homogeneous slurry allows the obtention of green bodies (i.e., the flexible electrode of the invention) with a distribution of the electrochemical active material suitable for a correct charge transfer.

A surfactant to SIS weight ratio of 1.5 to 1:100, preferably of 1:10 to 1:100, provides an optimized distribution of the solid particles in suspension and, consequently, improve the electrochemical response and reproducibility of the flexible electrodes obtained from the slurry of the invention. An amount of surfactant outside the established weight ratio range may negatively affect the distribution of the solid particles of the SIS and, as a consequence, the electrochemical response and reproducibility of the electrodes obtained from that slurry could be compromised. In addition to that, an amount of surfactant too high, i.e., above the specified range, may reduce the percentage of electrochemical active material in the slurry, which would even further negatively affect the electrochemical response of the electrodes obtained from that slurry.

A further essential component of the slurry of the invention is a lubricant agent which is a vegetable oil or a mixture of vegetable oils, wherein the ratio of said lubricant agent with respect to the SIS is of 1:36 to 1:200 by weight, preferably of 1:40 to 1:100 by weight.

Vegetable oil used as a lubricant in the invention described herein may comprise fatty acids with an unsaturation index of 100-200 g of I₂ per 100 g of oil. Said vegetable oil may be selected from soy oil, sunflower oil, maize oil, safflower oil, rapeseed oil, sesame oil, peanut oil, linseed oil and a combination thereof. In preferred embodiment, the vegetable oil is soy oil.

The lubricant helps to achieve a suitable fluidity and viscosity for a correct extrusion through the printing device, since a weight ratio outside the established ranges may result in problems in the printing process due to an unsuitable viscosity of the slurry. Besides, an amount of lubricant above a weight ratio of 1:36 with respect to the SIS may reduce the percentage of electrochemical active material, which would negatively affect the electrochemical response of the electrodes obtained by LDM or robocasting.

A further aspect of the invention refers to a process for manufacturing a slurry as described in this document, wherein the process comprises:
i) preparing a mixture of the solids in suspension (SIS), gelling agent, binder, plasticizing agent, surfactant and lubricant agent as described herein in an organic solvent at a temperature of 50°C to 100°C; and
ii) stirring the mixture of step i) at a temperature of 50 °C to 100°C, preferably for a period of at least 30 minutes.

Thus, the slurry of the invention can be obtained by adding all their components in the specified weight ratios to an organic solvent, while maintaining the mixture at a temperature of 50°C to 100°C and, once all the components have been added, stirring the final mixture at that temperature preferably for at least 30 minutes, thereby obtaining a suspension having a viscosity of 5000 to 35000 Pa·s, measured at a shear rate of 0.1 s-1 and 25 °C. During the process, the organic solvent is at least partially evaporated, but the weight ratios of the other components with respect to the solids in suspension is maintained. Once the slurry is obtained in step ii) of the process, it can be cold down or let allowed to cold down to a temperature of 20 to 30°C.

In particular embodiments of the invention, the organic solvent is heated at a temperature of 50-100°C and, after that, the other organic compounds of the slurry are added in the following order: binder, gelling agent, plasticizing agent, surfactant and lubricant. Finally, the SIS are added to the mixture of organic compounds (carrier) and the final mixture stirred at a temperature of 50-100°C, preferably for at least 30 minutes. In this way, all the components of the slurry are properly integrated giving rise to a homogeneous suspension of the SIS in the organic compounds.

In preferred embodiments, the mixture of step i) comprises an organic solvent in a weight ratio with respect to the SIS up to 1:1, preferably of 1:1 to 1:10, more preferably of 1:1 to 1:5.

The organic solvent used in the process for manufacturing a slurry as defined herein may be a ketone, an alcohol or an acetate, in particular a ketone, alcohol or acetate having a boiling point in the range of 50°C to 100°C, so that it can be evaporated in the process of obtaining the slurry. For example, the organic solvent may be acetone, methyl ethyl ketone (MEK), metil propyl ketone, methanol, ethanol, 1-propanol, 2-propanol (also known as isopropyl alcohol, IPA), 2-butanol, ethyl acetate or a combination thereof. Preferably, the solvent may be acetone, isopropyl alcohol or a combination thereof.

The preparation of the mixture of step i) may be preferably carried out by heating the solvent at the required temperature of 50°C to 100°C and sequentially adding the other components of the slurry to the heated solvent, preferably acetone, isopropyl alcohol or a combination thereof, while stirring preferably at a rate of 1000 rpm to 10000 rpm.

A further aspect of the invention refers to a flexible electrode obtained from the slurry as described herein, preferably by Liquid Deposition Modelling (LDM) or robocasting.

In particular embodiments, the electrode is an anode and the electrochemical active material is preferably selected from graphite and lithium titanium oxide (LTO); preferably the active material may be graphite.

In other particular embodiments, the electrode is a cathode and the electrochemical active material is preferably selected from lithium manganese oxide (LMNO), lithium cobalt oxide (LCO), lithium manganese oxide (LMO), lithium iron phosphate (LiFePO₄) and lithium nickel manganese cobalt oxide (Li-NMC); preferably the active material may be lithium manganese oxide (LMNO).

The electrodes of the invention provide a great advantage over the prior art because they show a suitable electrochemical performance, in particular, their capacitance values at different C rates are higher than the usual electrodes present in the market produced by traditional methods. Moreover, their impedance behaviour is similar. The improvement in these main electrochemical parameters shows an innovative result since printed electrodes present a remanent organic part, as opposed to the traditional electrodes, reducing the active material amount. Additionally, this remanent organic part gives flexibility to the electrode, improving the contact with the foil which enhances the flow of electrons. Moreover, this characteristic gives them mechanical adaptability, resilience and easy manipulation.

In the frame of this document, the flexibility of the electrodes should be understood in line with point 3.12 of the standard UNE EN ISO 178:2020, wherein it is specified that rigid plastics have a modulus of elasticity in flexure or, if that is not applicable, then in tension, greater than 700 MPa. Thus, it is considered that flexible materials such as the electrodes of the invention are those having a modulus of elasticity in flexure or, if that is not applicable, then in tension, equal to or lower than 700 MPa, determined as described in above-mentioned standard.

In preferred embodiments, the flexible electrodes of the invention has a modulus of elasticity equal to or lower than 500 MPa, more preferably equal to or lower than 100 MPa, and even more preferably equal to or lower than 50 MPa.

A further aspect of the invention refers to a method for manufacturing the flexible electrode described in this document, wherein the method comprises:
- obtaining a slurry according to the invention as described herein, preferably by the process of the invention, and
- manufacturing a flexible electrode from said slurry by Liquid Deposition Modelling (LDM) or robocasting.

Sometimes the SIS may be deposited at the bottom of the container, in particular when a period of time elapsed between the manufacture of the slurry and the printing by LDM or robocasting. With the aim to obtain a correct homogenization of the slurry and, therefore, a suitable distribution of the active material and reproducibility of the green body printed, the method for manufacturing the flexible electrodes of the invention may comprises a further step of stirring or mixing of the slurry prior to the printing. This additional step may be carried out, for example, by stirring the slurry at a rate of 6000 to 8000 rpm for a period of at least 2 minutes.

As previously mentioned, an essential feature for suitable printing by LDM or robocasting by the method of the invention is the viscosity of the slurry. Thus, the slurry has a viscosity of 5000 to 35000 Pa·s, measured at a shear rate of 0.1 s-1 and 25 °C.

The printing of the flexible electrodes can be made using the conventional parameters of the LDM or robocasting technology. Therefore, parameters such as the pressure to be applied, the nozzle temperature, the printing speed, the height of the layer and the diameter of the nozzle can be easily obtained by a skilled person in the art, if required after performing a reduced number of routine experiments. For instance, the printing process can be carried out at a printing rate speed of 20 to 30 mm/s, with a nozzle diameter of 0.4 mm to 0.8 mm; the slurry can be preheated at a temperature up to 70°C or, alternatively, can be printed without any pre-heat treatment; the injection pressure can be of 4 bar to 7 bar; and/or the printing bed and printing chamber can be at a temperature from room temperature (e.g. about 25 °C) up to 50°C.

In some particular embodiments, the temperature of the nozzle preferably is equal to or less than 250°C, since higher temperatures might negatively affect the quality of the printed green body.

In the method of the invention it is preferred that the printing by LDM or robocasting be carried out on a metallic foil (also referred to as collector in this document since it may resemble the collector of a battery). The metallic foil may be made of aluminium or copper, optionally comprising a carbon coating, and/or it may have a thickness of 10-30 µm, preferably of 10-20 µm.

In particular embodiments, the metallic foil used in the manufacturing of an anode can be a copper foil, whereas the metallic foil used in the manufacturing of a cathode can be an aluminium foil.

Printing the electrode on at least part of the surface of the metallic foil improves the adhesion and electrochemical performance of the electrode thus obtained without the need of using any adhesive. Additionally, the fracture strength of the electrode can be significantly increased.

In those embodiment of the invention wherein the electrode is printed on at least part of a metallic foil, the system electrode-metallic foil obtained also complies with the flexibility requirements as described in this document, which can be determined according to the standard UNE EN ISO 178:2020.

A further aspect of the invention refers to a lithium-ion battery (LiB) which comprises at least one flexible electrode as described in this document, preferably obtained by the LDM or robocasting method of the invention.

### BRIEF DESCRIPTION OF THE FIGURES

Figure 1: Nyquist diagram for the anionic electrodes according to the invention (CR) and comparative anionic electrodes manufactured by casting (CIC), which are not part of the invention.
Figure 2: Nyquist diagram for the cathodic electrodes according to the invention (CR) and comparative cathodic electrodes manufactured by casting (CIC), which are not part of the invention.
Figure 3 shows charge and discharge cycles from a rate of C/10 to maximum rate of 4C, as well as a recover at C/10 for the anionic electrodes according to the invention (CR, figure 3a) and comparative anionic electrodes manufactured by casting (CIC, figure 3b), which are not part of the invention.
Figure 4 shows charge and discharge cycles from a rate of C/10 to maximum rate of 4C, as well as a recover at C/10 of the cathodic electrodes printed according to the invention (CR, figure 4a) and comparative cathodic electrodes manufactured by casting (CIC, figure 4b), which are not part of the invention.
Figure 5: Photography of the specimens according to the invention, i.e., without thermal post-treatment (green bodies).
Figure 6: Stress/ Stroke Strain graph corresponding to the specimens according to the invention, i.e., without thermal post-treatment (green bodies).
Figure 7: Photography of comparative specimens obtained by the method as described herein, with the proviso that they have been thermally post-treated (sintered bodies). These samples are not part of the invention.
Figure 8: Stress/ Stroke Strain graph corresponding to comparative specimens obtained by the method as described herein, with the proviso that they have been thermally post-treated (sintered bodies). These samples are not part of the invention.
Figure 9: Comparison of the Stress/ Stroke Strain graphs corresponding to the specimens according to the invention (blue zone) and the comparative specimens (red zone), which are not part of the invention.
Figure 10: Comparison of the Stress/ Stroke Strain graphs corresponding to the specimens according to the invention wherein the electrode was printed on a collector (blue zone) and a further specimen according to the invention which was manufactured without a metallic collector (green zone).

### EXAMPLES

In the following, the invention will be further illustrated by means of examples and comparative examples. The examples should in no case be interpreted as limiting the scope of the invention, but only as an illustration of the invention.

### EXAMPLE 1: Slurry for manufacturing anodes

The electrochemical slurry production was divided into two consecutive parts.

First, the mixture of the organic part of the slurry was prepared as follows. Acetone was introduced in the mixer and heated until 55°C. Next, the agitation was activated, the binder (poly(vinyl) butyral, BA55H from Sigma Aldrich) was added and the mixture stirred until its complete dissolution. Then, gelling agent (ethylene glycol) and plasticizing agent (dibutyl phthalate) were added, followed by the surfactant (stearic acid) and the lubricant (soja oil). Each component was added in the following ratios regarding the SIS (i.e., the weight amount of electrochemical active material, electric conductive additive and ionic conductive additive):

| | Weight ratio (with respect to the SIS) |
|---|---|
| Binder | 1:8 |
| Gelling agent | 1:17 |
| Plasticizing agent | 1:17 |
| Surfactant | 1:28 |
| Lubricant | 1:98 |
| Solvent | 1:1 |

In the second step, once the organic components were completely dissolved and a homogeneous mixture was achieved, the SIS were added: Electrochemical active material (graphite), electric conductive additive (carbon black, C65) and ionic conductive additive (LLZO). Each component was added in the following weight percentage regarding the SIS (i.e., the weight amount of electrochemical active material, electric conductive additive and ionic conductive additive):

| | Weight percentage (with respect to the SIS) |
|---|---|
| Electrochemical active material | 87 % |
| Electric conductive additive | 6.5 % |
| Ionic conductive additive | 6.5 % |

The slurry was then heated until 65°C for 1 hour to remove the excess of organic solvent and obtain a slurry with a suitable viscosity. Finally, the slurry was cold down and transferred to a suitable container to print. The slurry thus obtained had a viscosity of 10,000 Pa·s, measured at a shear rate of 0.1 s-1 and 25 °C.

### EXAMPLE 2: Slurry for manufacturing cathodes

The same process as described in example 1 was carried out with the proviso that LMNO was used as electrochemical active material.

A suitable slurry having a viscosity of 10,000 Pa·s, measured at a shear rate of 0.1 s-1 and 25 °C was obtained.

### EXAMPLE 3: Manufacture of anodes according to the method of the invention from the slurry of example 1

Some anode electrodes were manufactured from the slurry obtained in example 1 by LDM printing with the following parameters:
- nozzle diameter: 0.8 mm,
- layer width: 0.86 mm,
- retraction: 0.8 mm,
- layer height: 0.4 mm,
- bed temperature: room temperature,
- chamber temperature: room temperature,
- printing speed: 35 mm/s.

The slurry of example 1 was introduced in a container such a syringe suitable for LDM/robocasting equipment, and printed on the surface of a copper foil (collector) according to the parameters above indicated. In this way, anode electrodes were printed on the copper foil to ensure the full contact between the electrode and the foil and produce a semi-cell (electrochemical results of said semi-cell are included below). No adhesive was needed.

The electrode obtained had a density of 0.7 g/cm² and a surface capacity of 0.458 mAh/cm².

### EXAMPLE 4: Manufacture of cathodes according to the method of the invention from the slurry of example 2

Cathode electrodes were manufactured from the slurry obtained in example 2 by LDM printing with the same parameters defined in example 3 above, with the proviso that they were printed on an aluminium foil (collector).

The electrode obtained had a density of 0.8 g/cm² and a surface capacity of 0.242 mAh/cm².

### COMPARATIVE EXAMPLE 3: Manufacture of an anode by casting

Anode electrodes were prepared by a conventional casting or doctor Blade method. In particular, a slurry was prepared by mixing the active material (graphite), a binder (polyvinylidene fluoride (PVDF)), conductive additives (carbon black C65 and LLZO), and an organic solvent (N-methyl pyrrolidone (NMP)) and obtaining a homogeneous suspension. The slurry thus obtained comprised 10 wt.% of the conventional binder (PVDF) and 90 wt.% of SIS, wherein the SIS comprised 80 wt.% of active material, 5 wt. % of electric conductive additive, 5 wt.% of ionic conductive additive, amounts expressed with regards to the sum of binder and SIS present.

This slurry was then coated onto a copper collector using a doctor Blade to achieve a uniform layer. After coating, the electrodes were dried at 80-120°C to remove the solvent, followed by calendaring to compact the electrode, enhancing particle contact and reducing internal resistance. The dried and compacted electrodes were then cut to the required dimensions, with optional additional drying under vacuum or inert atmosphere for moisture-sensitive systems. This method ensures uniformity, scalability, and compatibility with various materials, though solvent management and energy-intensive drying can be challenges.

The electrode obtained had a density of 2.5 g/cm² and a surface capacity of 1.641 mAh/cm².

### COMPARATIVE EXAMPLE 4: Manufacture of a cathode by casting

The same procedure of comparative example 3 was used with the proviso that the active material was LMNO and the collector was made of aluminium.

The electrode obtained had a density of 3.2 g/cm² and a surface capacity of 1.252 mAh/cm².

### Electrochemical results

### A) Anode

Measurements in semi-cell were made in a stagnant structure of the copper foil (collector) where the anodic electrode was printed and faced with lithium metal. The anode and the lithium metal were separated by the corresponding separator and embedded in a liquid electrolyte (LiFP₆).

Impedance studies were carried out to analyse the resistance of the printed anode electrode formulation to the movement of electrons, and capacitance studies were carried out to study how its capacity (mAh/g) varies with different charging and discharging rates (C rates).

These impedance and capacitance studies were carried out in electrodes printed by LDM or robocasting according to the method of the invention as described in example 3 and, additionally, in electrodes manufactured according to conventional methods (casting), comparative example 3, which are not part of the invention.

It is worth noting that the anodic slurry of the invention comprised a SIS content of 78 wt.% regarding the total weight amount of the slurry, wherein an amount of 68 wt.% was electrochemical active material (graphite), an amount of 5 wt.% was electric conductive additive (C65) and an amount of 5 wt.% was ionic conductive additive (LLZO). Besides, that slurry comprised 20 wt.% of the combination of organic compounds of the invention.

On the other hand, the anodic slurry manufactured by casting as described in comparative example 3 comprised a SIS content of 90 wt.% regarding the total weight amount of the slurry, wherein an amount of 80 wt.% was electrochemical active material (graphite), an amount of 5 wt.% was electric conductive additive (C65) and an amount of 5 wt.% was ionic conductive additive (LLZO). Thus, that slurry comprised 10 wt.% of conventional binder (PVDF).

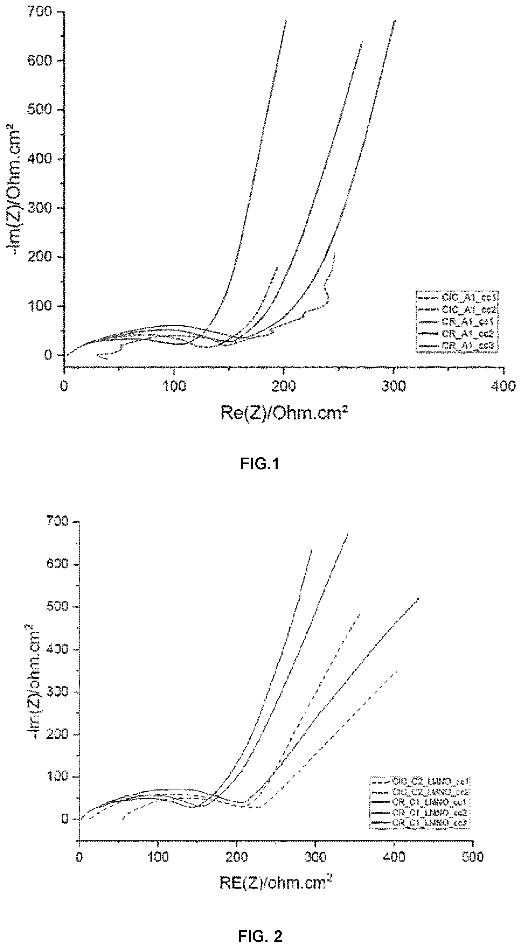

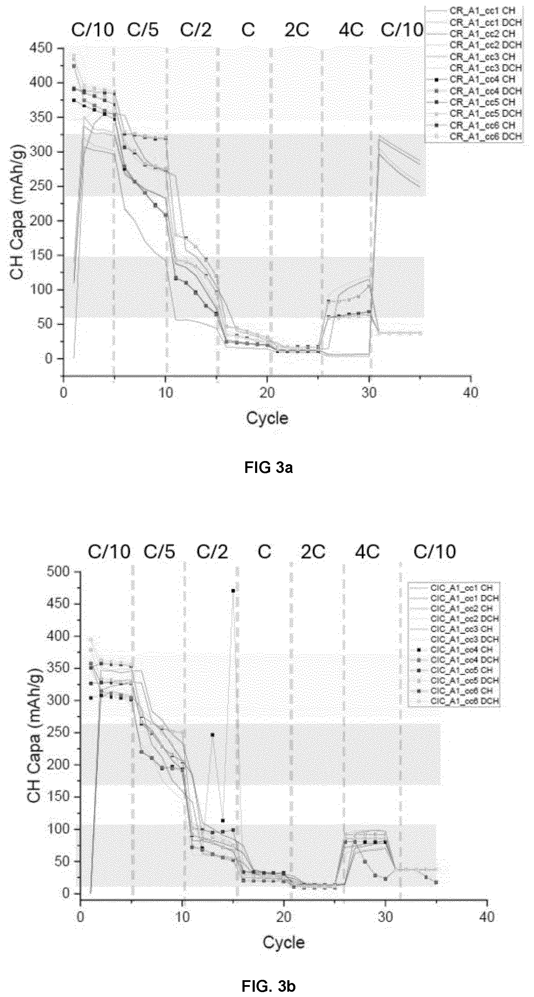

Results obtained showed that, despite the lower percentage of electrochemical active material present in the electrodes of the invention, they gave rise to similar impedance values than those manufactured by casting (see Figure 1). However, the capacity of the electrodes of the invention was higher for all the rates applied and, additionally, they recovered to C/10, which did not occur with the electrodes obtained by casting with a conventional binder (see Figures 3a and 3b). Additionally, the electrodes of the invention had a lower density than conventional electrodes obtained by casting with PVDF as a binder.

### B) Cathode

Measurements in semi-cell were made in a stagnant structure of the aluminium foil (collector) where the cathodic electrode was printed and faced with lithium metal. The cathode and the lithium metal were separated by the corresponding separator and embedded in a liquid electrolyte (LiFP₆).

Impedance studies were carried out to analyse the resistance of the printed anode electrode formulation to the movement of electrons, and capacitance studies were carried out to study how its capacity (mAh/g) varies with different charging and discharging rates (C rates).

These impedance and capacitance studies were carried out in electrodes printed by LDM or robocasting according to the method of the invention as described in example 4 and, additionally, in electrodes manufactured according to conventional methods (casting), comparative example 4, which are not part of the invention.

It is worth noting that the cathodic slurry of the invention comprised a SIS content of 78 wt.% regarding the total weight amount of the slurry, wherein an amount of 68 wt.% was electrochemical active material (LMNO), an amount of 5 wt.% was electric conductive additive (C65) and an amount of 5 wt.% was ionic conductive additive (LLZO). Besides, that slurry comprised 20 wt.% of the combination of organic compounds of the invention.

On the other hand, the cathodic slurry manufactured by casting as described in comparative example 4 comprised a SIS content of 90 wt.% regarding the total weight amount of the slurry, wherein an amount of 80 wt.% was electrochemical active material (LMNO), an amount of 5 wt.% was electric conductive additive (C65) and an amount of 5 wt.% was ionic conductive additive (LLZO). Thus, that slurry comprised 10 wt.% of conventional binder (PVDF).

Thus, the electrodes of the invention contained a lower amount of electrochemical active material (LMNO).

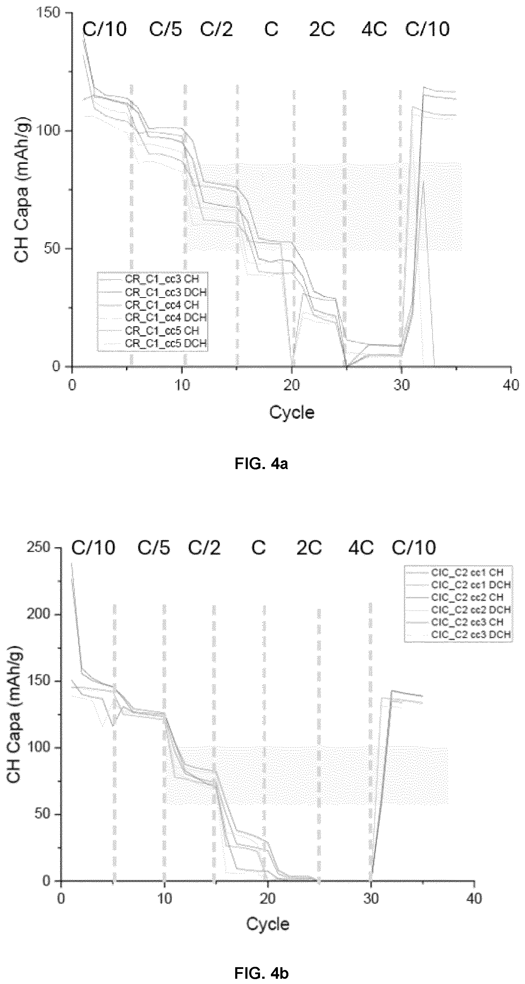

According to the results obtained (see Figures 2, 4a and 4b), impedance values of the electrodes of the invention (CR) were lower than that obtained for the cathodes prepared by casting with a conventional binder (CIC). Besides, they gave rise to similar capacity values at rates of C/10 and C/5, and higher capacities were reported at higher rates (C/2). Additionally, the electrode of the invention had a lower density than conventional electrodes obtained by casting with PVDF as a binder.

### Flexibility assay

With the aim to prove the flexibility of the electrodes of the invention, a study was carried out using specimens of anodic electrodes according to the invention (green bodies), which were obtained according to the method as described in example 3, with the proviso that the electrodes were printing on the surface of an aluminium foil of 10-30 µm thickness.

Besides, comparative specimens of cathodic electrodes had been manufactured according to the method as described in example 4, with the proviso that they had been thermally post-treated at a temperature of 1000 °C to eliminate the organic part of the formulation (sintered bodies). In this case, the same aluminium foil of 10-30 µm thickness was used to print the electrodes.

This flexibility study was carried out by a three point flexural test using an equipment for electromechanical assays EZ-X (Shimadzu). Geometries used were selected according to the corresponding ISO standard as follows:
- UNE EN ISO 178 2020. Plastics - Determination of flexural properties. Specimens (test samples) according to the invention. These specimens are also referred to as green body. Dimensions (length*width*thickness): 80*10*4 mm.
- UNE EN ISO 843-8:2010. Advanced technical ceramics - Mechanical properties of monolithic ceramics at room temperature - Part 8: Guidelines for conducting proof tests.
Comparative specimens thermally post-treated at a temperature of 1000°C. These specimens are also referred to as sintered body. Dimensions (length*width*thickness): 45*4*3 mm.

To carry out the three-point flexural studies, 5 specimens were manufactured for each UNE EN ISO standard. The test is based on the measurement of the displacement (Stroke Strain, %) until failure as a function of the pressure (stress) applied.

### UNE EN ISO 178 2020

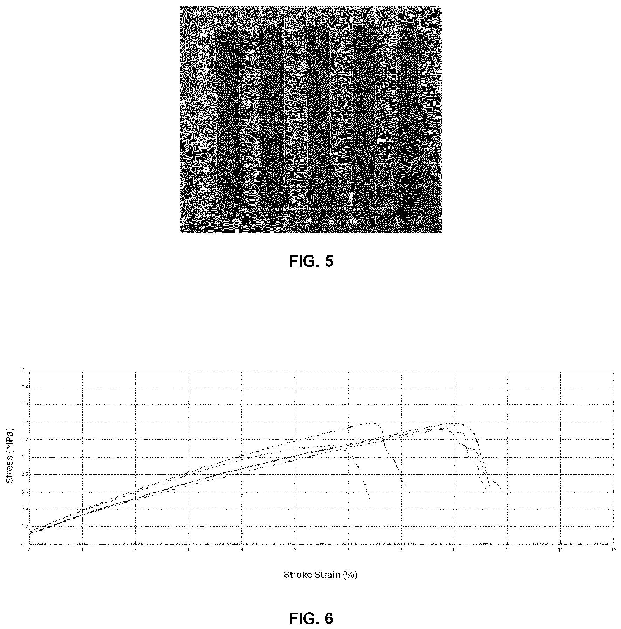

5 specimens or green bodies (Figure 5) were manufactured by printing the anodic slurry of the invention by LDM/robocasting following the procedure as described in example 3, with the proviso that they were printed on the surface of an aluminium foil of 10-30 µm thickness.

Results obtained from the three-points flexural study are reported in Figure 6. As can be seen, the specimens according to the invention show some elongation before failure. More specifically, an average elongation of about 7%, applying about 1.4 MPa.

### UNE EN ISO 843-8:2010

As mentioned above, the application of this standard requires that the specimens are monolithic ceramic bodies. For this purpose, specimens of cathodic electrodes were subjected to a thermal post-treatment in order to eliminate the organic part of the formulation and densify the final piece. This post-treatment cannot be done with the anodic electrodes.

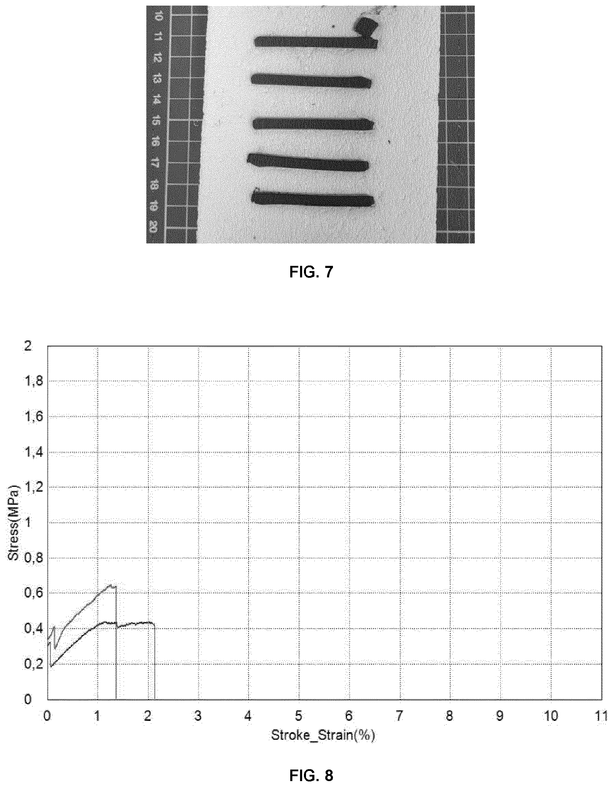

In the same way as in the previous case, 5 comparative specimens were manufactured. These specimens, after thermal treatment (sintered bodies), are shown in the photography of Figure 7.

Results obtained from the three-points flexural study of two comparative specimens are reported in Figure 8. Since the thermal post-treatment had removed the organic part of the formulation, a 100% ceramic specimens were obtained which were difficult to handle and, therefore, to test on the equipment. That's the reason why only the graph of two of the five comparative specimens manufactured is reported.

Thus, although the equipment was sensitive enough to be able to represent a reproducible behaviour between both comparative specimens, their excessive brittleness as they were 100% ceramic (sintered body) means that they broke, as soon as the test was started, with practically no force applied.

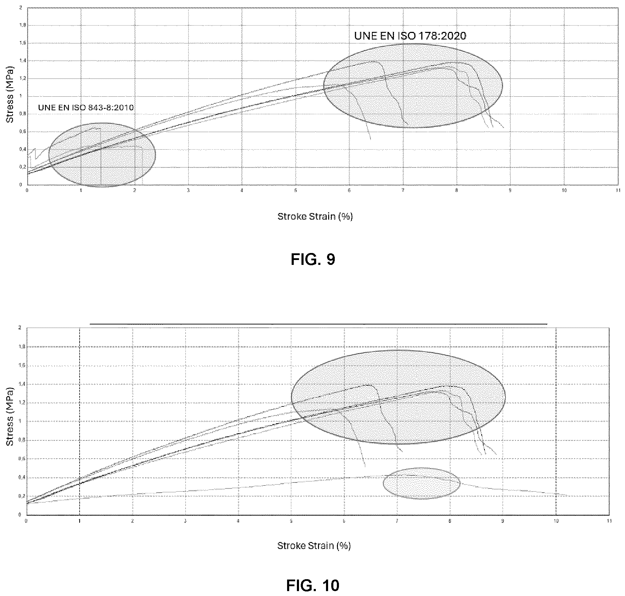

Figure 9 shows a comparison of the flexural test done according to the standards UNE EN ISO 178:2020 and UNE EN ISO 843-8:2010 for green body and sintered body, respectively. This figure shows a clear difference between the results obtained from the sintered bodies (red zone) and the green bodies (blue zone). The sintered bodies, not part of the invention, had no elongation even with virtually no stress applied (about 1.5 % elongation for 0.5 MPa). Different to that, the green bodies according to the invention presented an elongation of about 7 % applying a stress of 1.5 MPa.

Thus, the electrodes according to the invention (green bodies) allow a deformation about 4-5 times greater than the sintered bodies, which evidence their flexibility. Further, those electrodes according to the invention which are printed on a metallic collector withstand 3 times more deformation stress.

Figure 10 shows a comparison between different specimens according to the invention, ones printed on an aluminium collector (blue zone) and others printed without aluminium collector (green zone). As can be seen in this figure, both types of specimens show some elongation (about 7 %), but those specimens printed on a collector allow a significantly higher stress (about 1.4 MPa) before failure.

Thus, the thermal post-treatment of the specimens resulted in a severe reduction in the percentage of elongation, so that the equipment had difficulties testing said specimens.

These results prove that the presence of the organic part of the slurry of the invention is essential in order to obtain flexible electrodes. As previously mentioned in this document, the specific combination of gelling agent, binder, plasticizing, surfactant and lubricant of the current invention allows the manufacture of electrodes (either anodes or cathodes) with the required electrochemical performance despite the fact of comprising a significant amount of organic compounds. In addition to said electrochemical performance, they have some flexibility which make the electrodes of the invention particularly suitable for different applications.

In addition to that, the inventors found that the presence of a metallic collector as part of the printing process provides a further significant advantage, since it contributes to the fracture strength of the electrode according to the invention.

### Modulus of elasticity

Besides, the modulus of elasticity of these specimens were determined according to UNE EN ISO 178 2020. The results obtained are reported in the following table:

| Specimen | Modulus of elasticity, E (MPa) |
|---|---|
| 1 | 25 |
| 2 | 24 |
| 3 | 22 |
| 4 | 21 |
| 5 | 17 |
| 6 (without collector) | 5 |

## Claims

1. A slurry for manufacturing flexible electrodes, wherein said slurry is a suspension comprising the following components:
a) at least 60 wt.% solids in suspension (SIS) comprising at least one electrochemical active material,
b) a gelling agent selected from glycol, ethanolamine and mixtures thereof,
c) a binder selected from vinyl resins and mixtures thereof,
d) a plasticizing agent selected from phthalates and mixtures thereof,
e) a surfactant selected from ≥C₁₆ alkyl carboxylic acids, preferably C₁₆-C₃₀ fatty acids, and mixtures thereof; and
f) a lubricant agent selected from vegetable oils and mixtures thereof;
wherein, in the suspension,
the ratio of the gelling agent with respect to the SIS is from 1:2 to 1:30 by weight,
the ratio of the binder with respect to the SIS is from 1:3 to 1:40 by weight,
the ratio of the plasticizing agent with respect to the SIS is from 1:5 to 1:20 by weight,
the ratio of the surfactant with respect to the SIS is from 1:5 to 1:100 by weight, and
the ratio of the lubricant with respect to the SIS is from 1:36 to 1:200 by weight; and
wherein the slurry has a viscosity of 5000 to 35000 Pa·s, measured at a shear rate of 0.1 s-1 and 25 °C.

2. The slurry of claim 1 comprising of 60 wt.% to 85 wt.%, preferably of 75 wt.% to 85 wt.%, and more preferably of 80 wt.% to 85 wt.%, of solids in suspension (SIS).

3. The slurry of claims 1 or 2, wherein the solids in suspension (SIS) further comprises at least one electric conductive additive, at least one ionic conductive additive or a combination thereof.

4. The slurry of any one of the previous claims, wherein the ratio of the gelling agent with respect to the solids in suspension (SIS) is of 1:4 to 1:20 by weight.

5. The slurry of any one of the previous claims, wherein the ratio of the binder with respect to the solids in suspension (SIS) is of 1:5 to 1:30 by weight.

6. The slurry of any one of the preceding claims, wherein the ratio of the plasticizing agent with respect to the solids in suspension (SIS) is of 1:15 to 1:19 by weight.

7. The slurry of any one of the preceding claims, wherein the ratio of the surfactant with respect to the solids in suspension (SIS) is of 1:10 to 1:100 by weight.

8. The slurry of any one of the preceding claims, wherein the ratio of the lubricant with respect to the solids in suspension (SIS) is of 1:40 to 1:100 by weight.

9. A process for manufacturing a slurry as defined in any one of claims 1 to 8, wherein the process comprises:
i) preparing a mixture of components a) to f) as defined in any one of claims 1 to 8 in an organic solvent at a temperature of 50°C to 100°C; and
ii) stirring the mixture of step i) at a temperature of 50 °C to 100°C, preferably for at least 30 minutes.

10. The process of claim 9, wherein the weight ratio of the organic solvent with respect to the SIS in step i) is up to 1:1, preferably of 1:1 to 1:10, more preferably of 1:1 to 1:5.

11. A flexible electrode obtained from the slurry as defined in any one of claims 1 to 8.

12. The flexible electrode of claim 11, wherein
- said electrode is an anode and the active material is preferably selected from graphite and lithium titanium oxide (LTO); or
- said electrode is a cathode and the active material is preferably selected from lithium manganese oxide (LMNO), lithium cobalt oxide (LCO), lithium manganese oxide (LMO), lithium iron phosphate (LiFePO₄) and lithium nickel manganese cobalt oxide (Li-NMC).

13. A method for manufacturing the flexible electrode as defined in claim 11 or claim 12, wherein the method comprises:
- obtaining a slurry as defined in any one of claims 1 to 8, preferably by the process as defined in claims 9 or 10, and
- manufacturing a flexible electrode from said slurry by Liquid Deposition Modelling (LDM) or robocasting.

14. The method of claim 13, wherein step ii) comprises printing the flexible electrode on a metallic foil, preferably made of aluminium or copper.

15. A lithium-ion battery (LIB) which comprises at least one flexible electrode as defined in claim 11 or 12, preferably by the method as defined in claim 13 or 14.
